# EUROPÄISCHE PATENTANMELDUNG

(11) **EP 2 805 655 A1**
(43) Veröffentlichungstag der Anmeldung: **26.11.2014**
(21) Anmeldenummer: 14168472.0
(22) Anmeldetag: 15.05.2014
(51) Int. Cl.: A47J 43/046, A47J 43/07, A47J 43/08

(54) **Elektromotorisch betriebene Küchenmaschine sowie Verfahren zur Reinigung einer solchen Küchenmaschine**

(30) Priorität: 23.05.2013 DE 102013105309
(71) Anmelder: Vorwerk & Co. Interholding GmbH, 42275 Wuppertal (DE)
(72) Erfinder: Hahn, Pia, 42477 Radevormwald (DE)
(74) Vertreter: Müller, Enno

(57) **Zusammenfassung**

Die Erfindung betrifft zunächst ein Verfahren zur Reinigung einer elektromotorisch betriebenen Küchenmaschine (1), die einen Rührtopf (4), ein darin vorzugsweise als Messersatz ausgebildetes Rührwerk (6) und vorzugsweise einen Deckel (12) für den Rührtopf (4) aufweist, wobei durch die Reinigung das Rührwerk (6) und/oder eine Topfinnenfläche gereinigt werden sollen und die Reinigung durch eine Betätigung des Rührwerks (6) nach einer Füllung des Rührtopfes mit einer Reinigungsflüssigkeit (17) durchgeführt wird, wobei weiter jedenfalls eine programmgesteuerte, einmalige Richtungsumkehr des Rührwerks (6) vorgenommen wird. Um ein Verfahren der in Rede stehenden Art insbesondere zur Erzielung eines verbesserten Reinigungsergebnisses weiterzubilden, wird vorgeschlagen, dass zur selbsttätigen Bestimmung einer Dauer und/oder Drehzahl der Rührwerkdrehung nach der Richtungsumkehr eine Auswertung von Maschinendaten wie Dauer und/oder Drehzahl der einen oder mehreren vorangegangenen Drehphasen des Rührwerks (6) und/oder einer erfassten Füllstandsmenge vorgenommen wird. Des Weiteren betrifft die Erfindung eine elektromotorisch betriebene Küchenmaschine (1) mit einem Rührtopf (4), einem darin vorzugsweise als Messersatz ausgebildeten Rührwerk (6) und vorzugsweise einem Deckel (12) für den Rührtopf (4), zur Durchführung eines Verfahrens wie oben beschrieben.

## Beschreibung

Die Erfindung betrifft zunächst ein Verfahren zur Reinigung einer elektromotorisch betriebenen Küchenmaschine, die einen Rührtopf, ein darin vorzugsweise als Messersatz ausgebildetes Rührwerk und vorzugsweise einen Deckel für den Rührtopf aufweist, wobei durch die Reinigung das Rührwerk und/oder eine Topfinnenfläche gereinigt werden sollen und die Reinigung durch eine Betätigung des Rührwerks nach einer Füllung des Rührtopfes mit einer Reinigungsflüssigkeit durchgeführt wird, wobei weiter jedenfalls eine programmgesteuerte, einmalige Richtungsumkehr des Rührwerks vorgenommen wird.

Elektromotorisch betriebene Küchenmaschinen sind bekannt. Diese dienen insbesondere zur Vorbereitung oder zur Zubereitung von Speisen. Die zu verarbeitenden Lebensmittel werden hierbei in dem Rührtopf zufolge Einwirkung über das Rührwerk vermengt, gegebenenfalls auch bei Ausbildung des Rührwerkes als Messersatz zerkleinert. Nach einer Entleerung des Rührtopfes verbleiben in der Regel Lebensmittelreste wandungsinnenseitig des Rührtopfes und/oder an dem Rührwerk, insbesondere an den Messern des Messersatzes. Entsprechend ist eine Reinigung des Topfinnern und/ oder des Rührwerkes nötig. Hierzu ist weiter bspw. aus der DE 10 2009 030 132 A1 bekannt, zur Reinigung insbesondere der Topfinnenfläche das Rührwerk zu aktivieren, wobei weiter bekannt ist, dass hierzu eine programmgesteuerte, mehrmalige Richtungsumkehr des Rührwerks vorgenommen wird. Hierbei werden bevorzugt relativ hohe Drehzahlen des Rührwerks bzw. der Messerklingen eines Messersatzes erreicht, was in Verbindung mit der in dem Rührtopf vorgesehenen Reinigungsflüssigkeit zu einem Ablösen von insbesondere Speiseresten an der Topfinnenfläche und/oder an dem Rührwerk führt. Die Reinigungsflüssigkeit ist hierbei bevorzugt Wasser unter Zugabe eines Reinigungsmittels. Aus dem vorerwähnten Stand der Technik ist weiter bekannt, dass ohne weiteren Anwendereingriff eine mehrmalige Richtungsumkehr des Rührwerks vorgenommen wird, was sich positiv auf das Reinigungsergebnis auswirkt.

Im Hinblick auf den vorbeschriebenen Stand der Technik wird eine technische Problematik der Erfindung darin gesehen, ein Verfahren der in Rede stehenden Art insbesondere zur Erzielung eines verbesserten Reinigungsergebnisses weiterzubilden.

Eine mögliche Lösung der Aufgabe ist nach einem ersten Erfindungsgedanken bei einem Verfahren gegeben, bei welchem darauf abgestellt ist, dass zur selbsttätigen Bestimmung einer Dauer und/oder Drehzahl der Rührwerkdrehung nach der Richtungsumkehr eine Auswertung von Maschinendaten wie Dauer und/oder Drehzahl der einen oder mehreren vorangegangenen Drehphasen des Rührwerks und/oder einer erfassten Füllstandsmenge vorgenommen wird.

Weiter betrifft die Erfindung eine elektromotorisch betriebene Küchenmaschine, mit einem Rührtopf, einen darin vorzugsweise als Messersatz ausgebildeten Rührwerk und vorzugsweise einen Deckel für den Rührtopf, wobei ein Bedienfeld vorgesehen ist, wobei weiter das Bedienfeld eine Taste oder einen Drehschalter zur Auslösung eines programmierten Reinigungsvorganges aufweist und wobei selbsttätig eine Richtungsumkehr der Rührwerkdrehung vornehmbar ist.

Eine mögliche Lösung der gegenständlichen Aufgabe ist nach einem ersten Erfindungsgedanken bei einer Küchenmaschine gegeben, bei welcher darauf abgestellt ist, dass zur selbsttätigen Bestimmung einer Dauer und/oder Drehzahl des Rührwerks jedenfalls nach Einleitung einer Richtungsumkehr auf zuvor ermittelte Maschinendaten wie Dauer und/oder Drehzahl der einen oder mehreren vorangegangenen Drehphasen des Rührwerks und/oder eine erfasste Füllstandsmenge zurückgreifbar ist.

Zur Folge der vorgeschlagenen Lösung ist ein anwenderfreundliches, hinsichtlich des Ergebnisses positives Reinigungsverfahren, insbesondere des Rührtopfinneren, erreichbar. Zum Reinigen insbesondere des Topfinneren und/oder des Rührwerks startet der Anwender bevorzugt lediglich ein Reinigungsprogramm, wobei programmgesteuert das Rührwerk angetrieben wird. So ist weiter bevorzugt zumindest eine einmalige Richtungsumkehr des Rührwerks vorgesehen, welche weiter bevorzugt ebenso über die Programmsteuerung ausgelöst wird. Die Dauer und/oder die Drehzahl der Rührwerkdrehung nach der Richtungsumkehr ist hierbei bevorzugt abhängig, insbesondere direkt abhängig von der Dauer und/oder der Drehzahl, weiter bevorzugt gegebenenfalls zusätzlich von der Füllstandsmenge, d.h. der Menge der Reinigungsflüssigkeit in dem Rührtopf. Hierbei werden insbesondere die vorgenannten Parameter von der zumindest einen Drehphase vor einem Richtungswechsel als Bezugsdaten genommen. Alternativ werden mehrere, gegebenenfalls alle Parameter aller Rührwerkdrehungen, sofern mehrere solcher Rührwerkdrehungen zuvor durchgeführt wurden, benutzt, weiter darüber hinaus gegebenenfalls jeweils ein Mittelwert. Bevorzugt wird diesbezüglich die Berücksichtigung allein des letzten Rührwerklaufes vor einer Richtungsumkehr. Die Parameter der Rührwerkdrehung nach der Richtungsumkehr, also bevorzugt die Dauer und/oder die Drehzahl sind weiter bevorzugt in Abhängigkeit zu den Parametern der Drehphasen vor der Richtungsumkehr so gewählt, dass die rotierende Flüssigkeitssäule in kürzester Zeit zum Stillstand kommt. Hier ist bevorzugt eine Verkürzung des Zeitraumes zwischen programmgesteuertem Ausschalten des Rührwerks und Stillstand der Flüssigkeitssäule erreicht, die dem 0,1- bis 0,7-Fachen des gleichen Zeitraumes ohne Drehrichtungsumkehr des Rührwerkes entspricht.

Die Parameter insbesondere für die Dauer und/oder die Drehzahl des Rührwerks, sowie gegebenenfalls die Füllstandshöhe bzw. Füllstandsmenge vor einer Richtungsumkehr des Rührwerks sind bevorzugt in einer Tabelle eines weiter bevorzugt nicht flüchtigen Speichers in der Küchenmaschine vorgehalten, welche Tabelle weiter zu den jeweiligen Parametern Vorgaben für die Dauer und/oder Drehzahl des Rührwerkes nach der Richtungsumkehr anbietet. So ist bspw. bei einer Drehphase des Rührwerkes mit einer Drehzahl von 1.000 bis 1.200 U/Min. ein Gegenlauf des Rührwerkes über eine Sekunde bei einer Drehzahl von etwa 400 bis 600 U/Min. vorgegeben, um die Flüssigkeitssäule effektiv abzubremsen.

Der Anwender kann zufolge dieser Ausgestaltung insbesondere einen Deckel des Rührwerks nahezu unmittelbar nach Beendigung des Reinigungsprogrammes abnehmen. Die Flüssigkeitssäule hat sich hiernach zumindest so weit beruhigt, dass keine Flüssigkeit aus dem Rührtopf gelangt.

Die Parameter können in weiterer Ausgestaltung auch über eine Erkennung des Drehmoments am Antrieb des Rührwerks oder auch über die Messung der Rotationsgeschwindigkeit erfasst werden. Darüber hinaus ist auch die Höhe der Flüssigkeitssäule messbar, so insbesondere zufolge in der Topfwandung vorgesehener Sensoren. Eine Ausgestaltung zur Erfassung einer Füllstandsmenge ist beispielsweise aus der DE 20 2011 050 875 U1 bekannt. Der Inhalt dieser Gebrauchsmusterschrift wird hiermit vollinhaltlich in die Offenbarung vorliegender Erfindung mit einbezogen, auch zu dem Zweck, Merkmale dieser Gebrauchsmusterschrift in Ansprüche vorliegender Erfindung mit einzubeziehen. Hier sind bevorzugt Messfühler in Form von NTC-Elementen im Bereich der Rührtopfwandung vorgesehen.

Die vor- und nachstehend angegebenen Bereiche bzw. Wertebereiche oder Mehrfachbereiche schließen hinsichtlich der Offenbarung auch sämtliche Zwischenwerte ein, insbesondere in ¹/₁₀ -Schritten der jeweiligen Dimension, gegebenenfalls also auch dimensionslos, insbesondere 1,01-fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnungen erläutert, die aber lediglich ein Ausführungsbeispiel darstellt. Die Zeichnung zeigt:
- Figur 1:: in einer partiell geschnittenen Seitenansicht eine Küchenmaschine der in Rede stehenden Art mit einem Deckel-verschlossenen Rührtopf und einer in dem Rührtopf aufgenommenen und über ein Rührwerk in Drehung versetzte Reinigungsflüssigkeit;

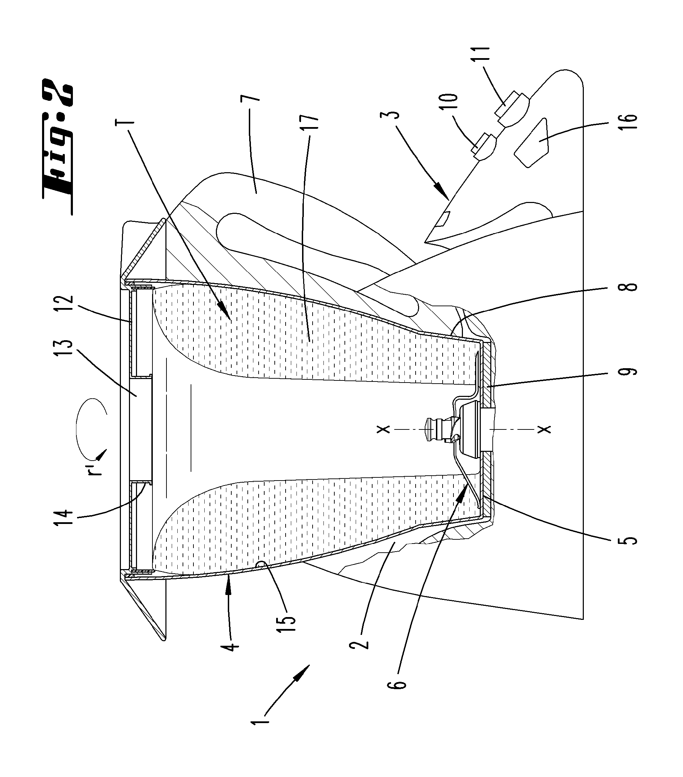

- Figur 2:: eine der Figur 1 entsprechende Darstellung nach einer Richtungsumkehr des Rührwerks.

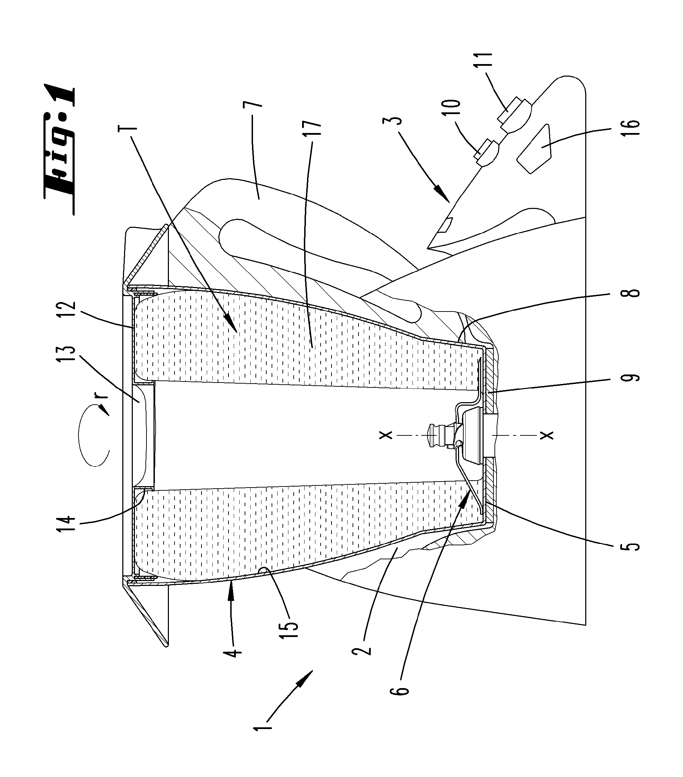

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührtopf 4 zuordbar, indem dieser in die Rührgefäß-Aufnahme 2 eingesetzt wird. In dem Rührtopf 4 ist dem Rührtopfboden 5 zugeordnet ein Rührwerk 6 vorgesehen, welches über einen in der Küchenmaschine 1 unterhalb der Aufnahme 2 angeordneten, nicht dargestellten Elektroantrieb betrieben wird.

Der Rührtopf 4 besitzt einen senkrecht ausgerichteten Haltegriff 7. Der Sockelbereich 8 des Rührtopfes 4 ist topfartig mit kreisrundem Querschnitt ausgebildet und trägt zentral im Inneren das Rührwerk 6.

Zur Drehmitnahme des Rührwerkes 6 wirkt dieses in der Topfzuordnungsstellung mit einem Kupplungsfortsatz der maschinenseitigen Antriebswelle zusammen. Zudem ist in der Zuordnungsstellung des Rührtopfes 4 in der Aufnahme 2 eine elektrische Kontaktierung einer topfbodenseitig angeordneten Heizung 9 erreicht.

Die Heizung 9 sowie das Rührwerk 6 bzw. der Antrieb für das Rührwerk 6 sind über Drehschalter 10, 11 im Bedienfeld 3 steuerbar.

Der Rührtopf 4 weist weiter einen Bodendurchmesser von bevorzugt 130 mm und einen Durchmesser im Öffnungs-Randbereich von bevorzugt 180 mm auf, dies bei einer Vertikalerstreckung des Rührtopfes 4 ausgehend vom Rührtopfboden 5 von bevorzugt etwa 150 mm, woraus sich ein maximales Füllvolumen von etwa 2,7 Liter ergibt.

Der Rührtopf 4 ist zur Inbetriebnahme der Küchenmaschine 1 überdeckt von einem Deckel 12. Dieser ist so ausgestaltet, dass sich eine Abstützung umlaufend entlang des Rührtopf-Öffnungsrandes ergibt, wobei der Deckel 12 nach vertikal innen in den Rührtopf 7 partiell eingreift.

Weiter ist der Deckel 12 mittig in koaxialer Ausrichtung zu einer Rührwerksachse x bevorzugt mit einer Einfüllöffnung 13 versehen, deren Öffnungsrand nach vertikal unten in einen umlaufenden Kragen 14 übergeht.

Die Küchenmaschine 1 ist mit einem programmgesteuerten Reinigungsverfahren zur Reinigung des Rührwerks 6 und/oder der sich aus der Topfbodenfläche und der Wandungsinnenfläche des Rührtopfes und des Deckels zusammensetzenden Topfinnenfläche 15 versehen. Dieses Reinigungsprogramm wird bevorzugt durch Betätigung einer in dem Bedienfeld 3 weiter vorgesehenen Taste 16 gestartet; läuft entsprechend nach Tasterbetätigung bis zur Beendigung des Programms automatisch ab.

Zum Reinigen des Rührwerks 6 und/oder der Topfinnenfläche 15 wird zunächst in einer Vorbereitungsphase der Rührtopf 4 mit einer Reinigungsflüssigkeit 17 befüllt, vorzugsweise mit vorgewärmten Wasser, insbesondere Leitungswasser in einem Temperaturbereich von 40° C bis 60° C. Es ist hierbei bevorzugt eine Füllhöhe der Reinigungsflüssigkeit 17 vorgesehen, die etwa ²/₃ der Topfhöhe von etwa 150 mm entspricht. Bei einem, wie in dem dargestellten Ausführungsbeispiel vorgesehenen maximalen Füllvolumen des Rührtopfes 4 von 2,7 Liter ist eine bevorzugte Befüllung des Rührtopfes 4 mit Reinigungsflüssigkeit 17 von 1,5 Liter vorgesehen.

Das in dem Rührtopf 4 eingefüllte Wasser kann verschmutzungsabhängig beispielsweise mit Geschirrspülmittel angereichert werden, so weiter bei einer Wasserfüllmenge von etwa 1,5 Liter mit maximal 10 g Geschirrspülmittel.

Mit dem Einfüllen der Reinigungsflüssigkeit 17, insbesondere dem vorerwärmten Wasser in den Rührtopf 4 ist die Vorbereitungsphase abgeschlossen.

Das Einfüllen der Reinigungsflüssigkeit 17 in den Rührtopf 4 kann bei aufgesetztem Deckel 12 durch die deckelseitige Einfüllöffnung 13 erfolgen. Alternativ wird zur Befüllung des Rührtopfes 4 der Deckel 12 abgenommen und dieser nach entsprechender Befüllung auf den Rührtopf 4 wieder aufgesetzt.

Mit Abschluss der Vorbereitungsphase wird zufolge Betätigung der Taste 16 ein in der Küchenmaschine 1 abgelegtes Programm abgerufen, über welches in dem Ausführungsbeispiel nacheinander zumindest zwei Programmphasen gesteuert werden.

Das Programm startet zunächst eine Reinigungsphase, bei welcher das Rührwerk 6 auf eine Geschwindigkeit von mindestens 1000 U/Min. beschleunigt wird, bis die Wassersäule eine stabile, an der Innenwand des Rührtopfes 4 rotierende Trombe T bildet (vgl. Figur 1). Hierbei stellt sich eine rotierende Trombe T ein, die die Innenwandung des Rührtopfes 4 bedeckt.

Ausgehend von einer ersten Drehrichtung r (Figur 1) wird, insbesondere zum Beenden des Reinigungsprogramms, programmgesteuert oder durch den Anwender ausgelöst die Drehrichtung des Rührwerks 6 umgekehrt.

Die Drehrichtungsumkehr schließt entsprechend bevorzugt automatisch unmittelbar im Anschluss an das Ende der vorangegangenen Drehphase an. Insbesondere die Drehzahl und Dauer der Aktivierung des Rührwerks nach einer Richtungsumkehr ist bevorzugt abhängig insbesondere von der Drehzahl und/oder Dauer der Rührwerkdrehung vor der Richtungsumkehr, darüber hinaus gegebenenfalls auch von der Füllstandshöhe der Flüssigkeit. So werden diese Parameter im Zuge der vorangegangenen Drehphase erfasst, so insbesondere die Füllstandshöhe über entsprechend vorgesehene Sensoren. Auch die Dauer und/oder die Drehzahl des Rührwerks werden entsprechend erfasst oder aus der Programmsteuerung übernommen. In einer hinterlegten Datenbank sind äquivalente Werte zu den Parametern vorgegeben, welche Werte zur Regelung der Drehphase nach einer Richtungsumkehr genutzt werden.

So ist in einer bevorzugten Ausgestaltung vorgesehen, dass bei einer Drehung des Rührwerkes vor einer Richtungsumkehr mit einer Drehzahl von 1.000 bis 1.500 U/Min. nach einem Drehrichtungswechsel das Rührwerk 6 eine Sekunde lang mit einer Geschwindigkeit von 400 bis 700 U/Min. betrieben wird. Dies führt in vorteilhafter Weise zu einem Bremsen der Wassertrombe T, welche gegenüber Verfahren ohne programmgesteuerte Drehrichtungsumkehr wesentlich schneller zusammenbricht.

Es können hierbei mehrere aufeinanderfolgende Drehrichtungsumkehr-Zyklen vorgesehen sein, d.h. jeweils eine Reinigungsphase mit schnell drehendem Rührwerk 6 in Drehrichtung r und einer hieran anschließenden Abbremsphase mit einem programmgesteuerten Drehen in entgegengesetzter Richtung r'.

Wird zyklisch die Wassertrombe T abgebremst, so führt dies in vorteilhafter Weise zu einer Verwirbelung der Reinigungsflüssigkeit insbesondere im Bereich des Rührwerkes 6, wodurch eine weitere Verbesserung der Reinigung insbesondere des Rührwerkes 6 erreichbar ist.

Jedenfalls ist in bevorzugter Ausgestaltung die Drehung des Rührwerks 6 in Drehrichtung r' mit Drehzahl- und Zeitparametern, welche in Abhängigkeit stehen zu den entsprechenden Parametern der vorangegangenen Drehphase, zum Abschluss des gesamten programmgesteuerten Reinigungsvorganges vorgesehen.

Zufolge der zeitlich schnellen Abbremsung der Trombe T ist ein Abnehmen des Deckels 12 nahezu unmittelbar nach Programmende vornehmbar, ohne dass Flüssigkeit unkontrolliert aus dem Rührtopf tritt.

In dem dargestellten Ausführungsbeispiel ist ein Rührwerk 6 mit vier höhenversetzten Messerklingen vorgesehen, welches Rührwerk 6 weiter in Abhängigkeit von der beschriebenen Geometrie des Rührtopfes 4 innerhalb einer Zeitspanne von etwa 1,1 Sekunden reversieren kann. Die entsprechende Reversion der Wassertrombe T erfolgt weiter bevorzugt innerhalb einer Zeitspanne von etwa 3 Sekunden.

Auch kann die vorbeschriebene Abbremsphase zufolge Drehrichtungsumkehr des Rührwerkes 6 im Anschluss an eine Hochgeschwindigkeitsphase im Zuge der Reinigung vorgesehen sein, in welcher Hochgeschwindigkeitsphase das Rührwerk 6 beispielsweise über einen Zeitraum von 20 bis 30 Sekunden mit einer Drehgeschwindigkeit von 4.000 bis 5.000 U/Min. gedreht wird. Solch hohe Drehgeschwindigkeiten sorgen für eine starke Zentrifugalkraft, welche angelöste Verschmutzungen von rotierenden Messerklingen des Rührwerkes 6 abschleudert. Eine hieran anschließende Drehrichtungsumkehr des Rührwerks 6 zum Abbremsen der hierbei entstehenden Trombe T ist beispielsweise auf 2 bis 3 Sekunden beschränkt, dies mit einer Drehzahl von 1.500 bis 2.500 U/Min.

### Bezugszeichenliste

- 1: Küchenmaschine
- 2: Rührgefäß-Aufnahme
- 3: Bedienfeld
- 4: Rührtopf
- 5: Rührtopfboden
- 6: Rührwerk
- 7: Haltegriff
- 8: Sockelbereich
- 9: Heizung
- 10: Drehschalter
- 11: Drehschalter
- 12: Deckel
- 13: Einfüllöffnung
- 14: Kragen
- 15: Topfinnenfläche
- 16: Taste
- 17: Reinigungsflüssigkeit

- r: Drehrichtung
- r': Drehrichtung
- x: Rotationsachse
- T: Trombe

## Patentansprüche

1. Verfahren zur Reinigung einer elektromotorisch betriebenen Küchenmaschine (1), die einen Rührtopf (4), ein darin vorzugsweise als Messersatz ausgebildetes Rührwerk (6) und vorzugsweise einen Deckel (12) für den Rührtopf (4) aufweist, wobei durch die Reinigung das Rührwerk (6) und/oder eine Topfinnenfläche gereinigt werden sollen und die Reinigung durch eine Betätigung des Rührwerks (6) nach einer Füllung des Rührtopfes mit einer Reinigungsflüssigkeit (17) durchgeführt wird, wobei weiter jedenfalls eine programmgesteuerte, einmalige Richtungsumkehr des Rührwerks (6) vorgenommen wird, **dadurch gekennzeichnet, dass** zur selbsttätigen Bestimmung einer Dauer und/oder Drehzahl der Rührwerkdrehung nach der Richtungsumkehr eine Auswertung von Maschinendaten wie Dauer und/oder Drehzahl der einen oder mehreren vorangegangenen Drehphasen des Rührwerks (6) und/oder einer erfassten Füllstandsmenge vorgenommen wird.

2. Elektromotorisch betriebene Küchenmaschine (1) mit einem Rührtopf (4), einem darin vorzugsweise als Messersatz ausgebildeten Rührwerk (6) und vorzugsweise einem Deckel (12) für den Rührtopf (4), wobei ein Bedienfeld (3) vorgesehen ist, wobei weiter das Bedienfeld (3) eine Taste (16) oder einen Drehschalter zur Auslösung eines programmierten Reinigungsvorganges aufweist und wobei selbsttätig eine Richtungsumkehr der Rührwerkdrehung vornehmbar ist, **dadurch gekennzeichnet, dass** zur selbsttätigen Bestimmung einer Dauer und/oder Drehzahl des Rührwerks (6) jedenfalls nach Einleitung einer Richtungsumkehr auf zuvor ermittelte Maschinendaten wie Dauer und/oder Drehzahl der einen oder mehreren vorangegangenen Drehphasen des Rührwerkes (6) und/oder eine erfasste Füllstandsmenge zurückgreifbar ist.
